# EUROPEAN PATENT APPLICATION

(11) **EP 4 593 273 A1**
(43) Date of publication of application: **30.07.2025**
(21) Application number: 25153686.8
(22) Date of filing: 24.01.2025
(51) Int. Cl.: H02M 1/00, H02M 1/32, H02M 7/44

(54) **POWER CONVERTER AND POWER CONVERTER CONTROL METHOD**

(30) Priority: 27.01.2024 CN 202410119344
(71) Applicant: Huawei Digital Power Technologies Co., Ltd., Shenzhen, Guangdong 518043 (CN)
(72) Inventor: LI, Junjie, Shenzhen, 518043 (CN); WANG, Xu, 518043 Shenzhen (CN); YU, Xinyu, 518043 Shenzhen (CN); SHAO, Zhangping, 518043 Shenzhen (CN); XIN, Kai, 518043 Shenzhen (CN)
(74) Representative: Isarpatent

(57) **Abstract**

This application provides a power converter and a power converter control method. The power converter includes a three-phase inverter circuit and a controller. The controller is configured to: when a value of a maximum phase voltage in three-phase voltages output by the three-phase inverter circuit is greater than a first voltage value, a value of a minimum phase voltage in the three-phase voltages output by the three-phase inverter circuit is less than a second voltage value, and a positive-sequence component of the three-phase voltages is greater than a third voltage value, or when an absolute value of a difference between any phase voltage and another phase voltage in three-phase voltages is greater than a first preset threshold, and a positive-sequence component of the three-phase voltages is greater than a third voltage value, control an active current and a reactive current that are output by the three-phase inverter circuit to be a first current value and a second current value respectively, where the first current value and the second current value are fixed values. According to this application, the power converter can support switching of a power supply system from phase-loss on-grid to normal on-grid without disconnecting from a grid.

## Description

### TECHNICAL FIELD

This application relates to the power electronics field, and in particular, to a power converter and a power converter control method.

### BACKGROUND

As an on-grid capacity in a new energy power supply system increases, there are more on-grid inverters in the power supply system. A large quantity of new energy power plants output electric energy to a grid through long-distance power transmission lines. When the long-distance power transmission line is short-circuited or the on-grid inverter is faulty, the power supply system is short-circuited. A switch is disposed on a line between the on-grid inverter and the grid. When a short-circuit fault occurs in the power supply system, a power converter may respond based on fault ride-through. In a serious case, overcurrent protection of a grid protection apparatus in the power supply system may be triggered to turn off a switch corresponding to a faulty line, and the switch is turned on again after the fault at a short-circuit point is rectified. Therefore, before the power supply system turns on the switch again or successfully switches from phase-loss on-grid to normal on-grid, a faulty phase of the power supply system is disconnected, and other non-faulty phases keep operating. However, during phase-loss operation of the power supply system, if the on-grid inverter still responds based on the short-circuit fault, the on-grid inverter outputs a large amount of reactive power and active power, and a power transmission line and a transformer coil may be overloaded and damaged. As a result, overvoltage and oscillation occur on a high-voltage side of the grid, and a power device in the power supply system is damaged.

### SUMMARY

Embodiments of this application provide a power converter and a power converter control method, to reduce impact of the power converter on a grid when the power converter operates in a phase-loss on-grid period, and enable the power converter to support switching of a power supply system from phase-loss on-grid to normal on-grid without disconnecting from the grid.

According to a first aspect, this application provides a power converter. The power converter includes a three-phase inverter circuit and a controller. An input end of the three-phase inverter circuit is configured to connect to a direct current power supply, and an output end of the three-phase inverter circuit is configured to connect to a grid. The controller is configured to: when a value of a maximum phase voltage in three-phase voltages output by the three-phase inverter circuit is greater than a first voltage value, a value of a minimum phase voltage in the three-phase voltages output by the three-phase inverter circuit is less than a second voltage value, and a positive-sequence component of the three-phase voltages is greater than a third voltage value, or when an absolute value of a difference between any phase voltage and another phase voltage in three-phase voltages is greater than a first preset threshold, and a positive-sequence component of the three-phase voltages is greater than a third voltage value, control an active current and a reactive current that are output by the three-phase inverter circuit to be adjusted to a first current value and a second current value respectively, where the first current value and the second current value are fixed values. The first voltage value is greater than the third voltage value, the third voltage value is greater than the second voltage value, the value of the maximum phase voltage is a maximum alternating current voltage amplitude or a maximum valid alternating current voltage value in the three-phase voltages, and the value of the minimum phase voltage is a minimum alternating current voltage amplitude or a minimum valid alternating current voltage value in the three-phase voltages.

In this application, the controller determines, based on the three-phase voltages output by the three-phase inverter circuit, whether the power converter operates with a phase loss. No additional phase loss detection apparatus is required, costs of detecting a phase-loss working condition are low, and a negative-sequence reactive power or a harmonic does not need to be injected into the grid for detection, to avoid affecting voltage quality of the grid. After identifying that the power converter operates with a phase loss, that is, identifying that a switch corresponding to a fault phase in the power converter is turned off, the controller controls the active current and the reactive current that are output by the three-phase inverter circuit to be the preset fixed values. This avoids overload of active power and reactive power that are borne by a normal phase in the power converter in a phase-loss period, and prevents an output port of the normal phase from being damaged due to overheat caused by an increase in a voltage and a current, so that the power converter keeps on-grid in the phase-loss period until a power supply system is supported in completing switching from phase-loss on-grid to normal on-grid.

In a possible implementation, an absolute value of the first current value is less than or equal to a maximum value of an absolute value of an active current instruction value, and an absolute value of the second current value is less than or equal to a maximum value of an absolute value of a reactive current instruction value, where the active current instruction value is determined by input power provided by the direct current power supply or required power of the grid, and the reactive current instruction value is determined by an output voltage of the power converter. After the controller identifies that the power converter operates with the phase loss, the controller controls the active current and the reactive current that are output by the three-phase inverter circuit to be the preset fixed values, to prevent the three-phase inverter circuit from outputting a large amount of reactive power and active power in the phase-loss period. The active current and the reactive current that are output by the three-phase inverter circuit do not exceed an active current and a reactive current that are output before the phase-loss on-grid, so that output power that is shared by a transmission line and that is output by the normal phase is reduced, and the power converter can support the power converter in completing switching from the phase-loss on-grid to the normal on-grid without disconnecting from the grid.

In a possible implementation, the first current value is j times an active current value output by the three-phase inverter circuit when the three-phase inverter circuit operates normally, and the second current value is k times a reactive current value output by a three-phase inverter circuit when the three-phase inverter circuit operates normally, where j and k satisfy 0≤j, and k< 1. The active current and the reactive current that are output by the three-phase inverter circuit are controlled to not exceed the active current and the reactive current that are output before the phase-loss on-grid. This prevents the three-phase inverter circuit from outputting the large amount of reactive power and active power in the phase-loss period, and reduces the output power that is shared by the transmission line and that is output by the normal phase.

In a possible implementation, the first current value is j times an active current value output by the three-phase inverter circuit when the three-phase inverter circuit operates normally, and the second current value is k times a reactive current value output by the three-phase inverter circuit when the three-phase inverter circuit operates normally, where j satisfies 0.05≤j≤0.15, and k satisfies 0<k≤0.1. The active current and the reactive current that are output by the three-phase inverter circuit are controlled to not exceed the active current and the reactive current that are output before the phase-loss on-grid. This prevents the three-phase inverter circuit from outputting the large amount of reactive power and active power in the phase-loss period, and reduces the output power that is shared by the transmission line and that is output by the normal phase.

In a possible implementation, the controller is configured to: when the value of the maximum phase voltage is less than a fourth voltage value, and a value of a minimum phase voltage is greater than a fifth voltage value, or when a difference between the value of the maximum phase voltage and the value of the minimum phase voltage is less than a second preset threshold, control the active current output by the three-phase inverter circuit to change with the input power provided by the direct current power supply or the required power of the grid and the reactive current output by the three-phase inverter circuit to change with an output voltage of the three-phase inverter circuit, where the fourth voltage value is greater than the third voltage value and less than or equal to the first voltage value, and the fifth voltage value is greater than or equal to the second voltage value and less than the third voltage value. The controller detects, based on the three-phase voltages output by the three-phase inverter circuit, that the voltage at the port of the power converter recovers to normal, that is, whether the power converter successfully switches from the phase-loss on-grid to the normal on-grid, and recovers instructions in a normal on-grid period after identifying that the voltage at the port recovers to normal. This ensures support of the power converter for the grid.

In a possible implementation, the controller is configured to: when an absolute value of a difference between at least one phase voltage and another phase voltage in the three-phase voltages is less than a third preset threshold, control the active current output by the three-phase inverter circuit to change with the input power provided by the direct current power supply or the required power of the grid and the reactive current output by the three-phase inverter circuit to change with an output voltage of the three-phase inverter circuit, where the third preset threshold is less than or equal to the first preset threshold. When the absolute value of the difference between the phase voltages in the three-phase voltages output by the three-phase inverter circuit decreases, the controller determines that the power converter successfully switches from the phase-loss on-grid to the normal on-grid, and recovers the instructions in the normal on-grid period after identifying the normal on-grid. This ensures the support of the power converter for the grid.

In a possible implementation, the power converter is a photovoltaic inverter, the direct current power supply is a photovoltaic module, the active current instruction value is positively correlated with a value of maximum output power of the photovoltaic module, and the reactive current instruction value changes in a negative correlation with a value of the output voltage of the photovoltaic inverter. The instruction in the normal on-grid period is recovered after the normal on-grid is identified. This ensures the support of the power converter for the grid.

In a possible implementation, the power converter is a power conversion system, the direct current power supply is an energy storage battery, the active current instruction value is positively correlated with a value of the required power of the grid, and the reactive current instruction value changes in a negative correlation with a value of the output voltage of the converter. The instruction in the normal on-grid period is recovered after the normal on-grid is identified. This ensures the support of the power converter for the grid.

According to a second aspect, this application provides a power converter control method. The method includes: when a value of a maximum phase voltage in three-phase voltages output by a three-phase inverter circuit in a power converter is greater than a first voltage value, a value of a minimum phase voltage in the three-phase voltages output by the three-phase inverter circuit is less than a second voltage value, and a positive-sequence component of the three-phase voltages is greater than a third voltage value, or when an absolute value of a difference between any phase voltage and another phase voltage in three-phase voltages is greater than a first preset threshold, and a positive-sequence component of the three-phase voltages is greater than a third voltage value, controlling an active current and a reactive current that are output by the three-phase inverter circuit to be adjusted to a first current value and a second current value respectively, where the first current value and the second current value are fixed values. The first voltage value is greater than the third voltage value, the third voltage value is greater than the second voltage value, the value of the maximum phase voltage is a maximum alternating current voltage amplitude or a maximum valid alternating current voltage value in the three-phase voltages, and the value of the minimum phase voltage is a minimum alternating current voltage amplitude or a minimum valid alternating current voltage value in the three-phase voltages.

In this application, based on the three-phase voltages output by the three-phase inverter circuit, whether the power converter operates with a phase loss is determined. No additional phase loss detection apparatus is required, costs of detecting a phase-loss working condition are low, and a negative-sequence reactive power or a harmonic does not need to be injected into a grid for detection, to avoid affecting voltage quality of the grid. After it is identified that the power converter operates with the phase loss, the active current and the reactive current that are output by the three-phase inverter circuit are controlled to be the preset fixed values, or active power and reactive power that are output by the three-phase inverter circuit are controlled to be the preset fixed values. This avoids damage to a port of a normal phase due to overload of both reactive power and active power that are borne by the port of the normal phase during phase-loss operation, avoids outputting a large amount of reactive power and active power by the three-phase inverter circuit because high/low voltage ride-through logic or islanding is triggered for response, reduces impact of the power converter on the grid, and enables the power converter to support the power converter in completing switching from phase-loss on-grid to normal on-grid without disconnecting from the grid.

In a possible implementation, an absolute value of the first current value is less than or equal to a maximum value of an absolute value of an active current instruction value, and an absolute value of the second current value is less than or equal to a maximum value of an absolute value of a reactive current instruction value, where the active current instruction value is determined by input power provided by the direct current power supply or required power of the grid, and the reactive current instruction value is determined by an output voltage of the power converter. After it is identified that the power converter operates with the phase loss, the active current and the reactive current that are output by the three-phase inverter circuit are controlled to be the preset fixed values, to prevent the three-phase inverter circuit from outputting the large amount of reactive power and active power in a phase-loss period. The active current and the reactive current that are output by the three-phase inverter circuit do not exceed an active current and a reactive current that are output before the phase-loss on-grid, so that output power that is shared by a transmission line and that is output by the normal phase is reduced, and the power converter can support the power converter in completing switching from the phase-loss on-grid to the normal on-grid without disconnecting from the grid.

In a possible implementation, the first current value is j times an active current value output by the three-phase inverter circuit when the three-phase inverter circuit operates normally, and the second current value is k times a reactive current value output by a three-phase inverter circuit when the three-phase inverter circuit operates normally, where j and k satisfy 0≤j, and k< 1. The active current and the reactive current that are output by the three-phase inverter circuit are controlled to not exceed the active current and the reactive current that are output before the phase-loss on-grid. This prevents the three-phase inverter circuit from outputting the large amount of reactive power and active power in the phase-loss period, and reduces the output power that is shared by the transmission line and that is output by the normal phase.

In a possible implementation, the first current value is j times an active current value output by the three-phase inverter circuit when the three-phase inverter circuit operates normally, and the second current value is k times a reactive current value output by the three-phase inverter circuit when the three-phase inverter circuit operates normally, where j satisfies 0.05≤j≤0.15, and k satisfies 0<k≤0.1. The active current and the reactive current that are output by the three-phase inverter circuit are controlled to not exceed the active current and the reactive current that are output before the phase-loss on-grid. This prevents the three-phase inverter circuit from outputting the large amount of reactive power and active power in the phase-loss period, and reduces the output power that is shared by the transmission line and that is output by the normal phase.

In a possible implementation, the method includes: when the value of the maximum phase voltage is less than a fourth voltage value, and the value of the minimum phase voltage is greater than a fifth voltage value, or when a difference between the value of the maximum phase voltage and the value of the minimum phase voltage is less than a second preset threshold, controlling the active current output by the three-phase inverter circuit to change with the input power provided by the direct current power supply or the required power of the grid and the reactive current output by the three-phase inverter circuit to change with an output voltage of the three-phase inverter circuit, where the fourth voltage value is greater than the third voltage value and less than or equal to the first voltage value, and the fifth voltage value is greater than or equal to the second voltage value and less than the third voltage value. It is detected, based on the three-phase voltages output by the three-phase inverter circuit, that the voltage at the port of the power converter recovers to normal, that is, it is detected whether the power converter successfully switches from the phase-loss on-grid to the normal on-grid, and instructions in a normal on-grid period are recovered after it is identified that the voltage at the port recovers to normal. This ensures support of the power converter for the grid.

In a possible implementation, the method includes: when an absolute value of a difference between at least one phase voltage and another phase voltage in the three-phase voltages is less than a third preset threshold, controlling the active current output by the three-phase inverter circuit to change with the input power provided by the direct current power supply or the required power of the grid and the reactive current output by the three-phase inverter circuit to change with an output voltage of the three-phase inverter circuit, where the third preset threshold is less than or equal to the first preset threshold. When the absolute value of the difference between the phase voltages in the three-phase voltages output by the three-phase inverter circuit decreases, it is determined that the power converter successfully switches from the phase-loss on-grid to the normal on-grid, and the instructions in the normal on-grid period are recovered after the normal on-grid is identified. This ensures the support of the power converter for the grid.

### BRIEF DESCRIPTION OF DRAWINGS

FIG. 1 is a diagram of an application scenario of a power supply system according to this application;
FIG. 2 is a diagram of another application scenario of a power supply system according to this application;
FIG. 3 is a diagram of another application scenario of a power supply system according to this application;
FIG. 4 is a diagram of another application scenario of a power supply system according to this application;
FIG. 5 is a diagram of output control of a three-phase inverter circuit according to this application; and
FIG. 6 is a schematic flowchart of a power converter control method according to this application.

### DESCRIPTION OF EMBODIMENTS

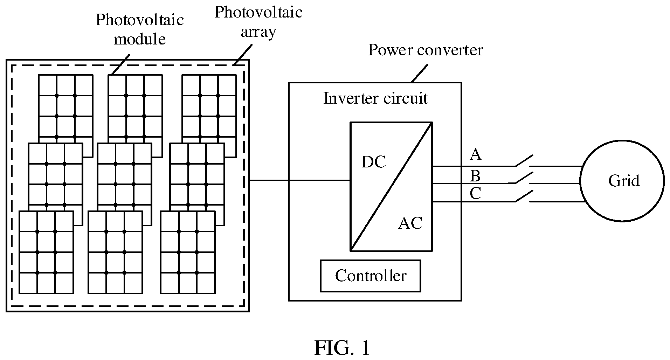

FIG. 1 is a diagram of an application scenario of a power supply system according to this application. The power supply system provided in this application may include a direct current power supply and a power converter. The direct current power supply may be a photovoltaic array. The photovoltaic array includes a plurality of photovoltaic modules connected in series or in parallel. An output end of the photovoltaic module may be connected to an input end of the power converter. Herein, the power converter may include a three-phase inverter circuit. An input end of the three-phase inverter circuit may be connected to the photovoltaic module, and an output end of the three-phase inverter circuit is configured to connect to a grid. The output end of the three-phase inverter circuit may include ports of three phases A, B, and C. The power converter may perform, via the three-phase inverter circuit, inversion conversion on a direct current provided by the photovoltaic array, to output an alternating current obtained through the inversion conversion to the grid for power supply.

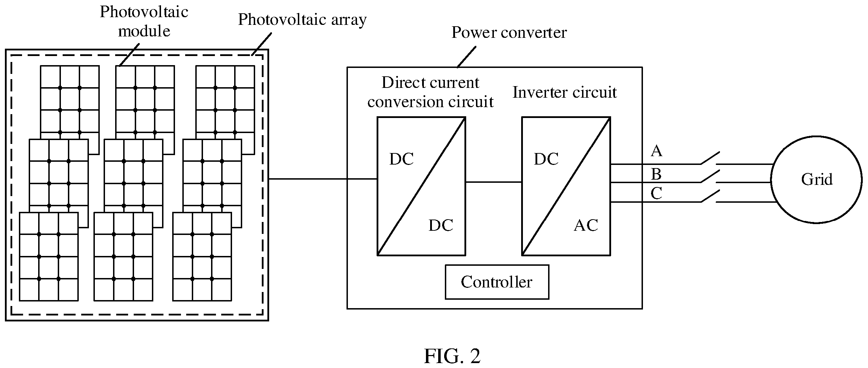

In some feasible implementations, the power converter may include a direct current conversion circuit and the three-phase inverter circuit. FIG. 2 is a diagram of another application scenario of the power supply system according to this application. As shown in FIG. 2, an input end of the direct current conversion circuit may be connected to the photovoltaic module, and an output end of the direct current conversion circuit may be connected to the input end of the three-phase inverter circuit. The output end of the three-phase inverter circuit is configured to connect to the grid. The power converter may perform, via the direct current conversion circuit, voltage transformation on a direct current provided by the photovoltaic array, and perform inversion conversion, via the three-phase inverter circuit, on a direct current obtained through the voltage transformation, to output an alternating current obtained through the inversion conversion to the grid for power supply.

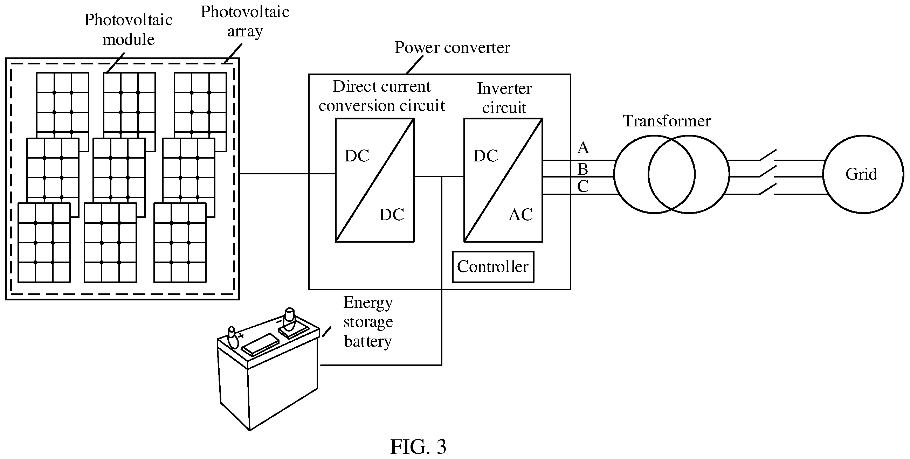

In some feasible implementations, the direct current power supply may further include an energy storage battery. FIG. 3 is a diagram of another application scenario of the power supply system according to this application. As shown in FIG. 3, an output end of the energy storage battery may be connected to the output end of the direct current conversion circuit in the power converter. The energy storage battery may provide a direct current for the three-phase inverter circuit. The three-phase inverter circuit performs inversion conversion on the direct current provided by the energy storage battery, and outputs an alternating current obtained through the inversion conversion to the grid for power supply.

In some feasible implementations, after the direct current conversion circuit in the power converter performs voltage transformation on a direct current provided by the photovoltaic array in FIG. 3, the energy storage battery may be charged based on the direct current output by the power converter.

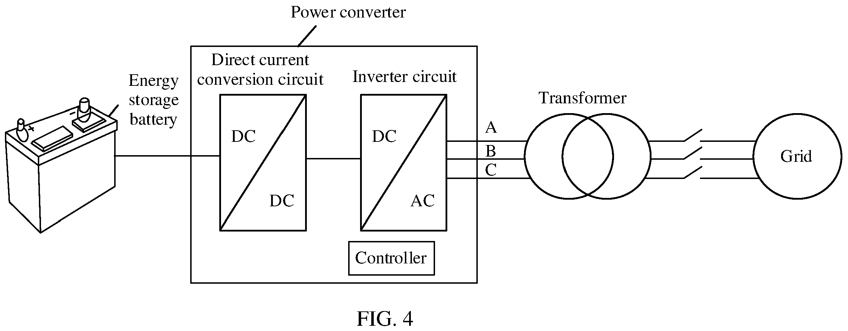

In some feasible implementations, the output end of the energy storage battery may be connected to the input end of the direct current conversion circuit in the power converter. FIG. 4 is a diagram of another application scenario of the power supply system according to this application. As shown in FIG. 4, the output end of the energy storage battery may be connected to the input end of the direct current conversion circuit in the power converter. The energy storage battery may provide a direct current for the input end of the direct current conversion circuit. The direct current conversion circuit performs voltage transformation on the direct current provided by the energy storage battery, and performs inversion conversion on a direct current obtained through the voltage transformation, to output an alternating current obtained through the inversion conversion to the grid for power supply.

In some feasible implementations, the power supply system may further include a transformer. As shown in FIG. 3 or FIG. 4, the output end of the three-phase inverter circuit in the power converter may be connected to the grid via the transformer, and the transformer is configured to: perform voltage transformation on an alternating current output by the power converter, and then output an alternating current to the grid for power supply.

In the application scenarios shown in FIG. 1 to FIG. 4, a short-circuit fault may occur in the power supply system. For example, a line between the power converter and the grid is short-circuited, or the power converter is faulty. In the foregoing power supply system, a switch (for example, a circuit breaker) is included on the line between the power converter and the grid, that is, one switch is disposed between each of the ports of the three phases A, B, and C of the power converter and the grid. Refer to the power converter shown in FIG. 1 to FIG. 4 again. A switch is disposed between each of the ports of the three phases A, B, and C of the three-phase inverter circuit in the power converter and the grid. When a short-circuit fault occurs in the power supply system, for example, the line between the power converter and the grid is short-circuited, the power converter responds based on fault ride-through. In a serious case, overcurrent protection of a grid protection apparatus in the power supply system may be triggered to turn off a switch corresponding to a faulty line, and the corresponding switch is turned on again after the fault at a short-circuit point is removed. The power converter shown in FIG. 1 is used as an example. When a line between the output port of the phase A of the power converter and the grid is short-circuited, the grid protection apparatus in the power supply system is triggered to perform overcurrent protection to turn off a switch corresponding to the output port of the phase A, and before the switch is turned on again, switches corresponding to the output ports of the phase B and phase C keep on, and the power supply system operates with a phase loss. Only the output ports of the phase B and the phase C keep connected to the grid during phase-loss operation. Therefore, when the power converter keeps output active power unchanged, and output inductive reactive power increasing with an increase in a voltage of the grid, the phase B and the phase C bear active power and reactive power of the phase A. As a result, both the active power and the reactive power that are borne by the phase B and the phase C are overloaded, and voltages and currents of the output ports of the phase B and the phase C increase. If the voltages and currents of the output ports of the phase B and the phase C are continuously excessively high, the output ports of the phase B and the phase C are overheated or even line damage is caused, and the power converter has poor on-grid operating reliability.

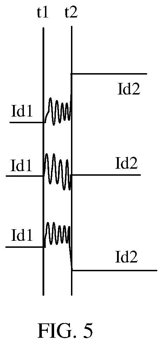

In the power supply system provided in this application, the power converter includes a controller, the direct current conversion circuit, and the three-phase inverter circuit. In an operating process of the power converter, the three-phase inverter circuit may output three-phase voltages (or may be referred to as three-phase alternating currents or three-phase grid voltages), and the three-phase voltages may include voltages of the three phases A, B, and C. A positive-sequence component, a negative-sequence component, and a zero-sequence component may be divided based on a sequence of the three phases A, B, and C. The positive-sequence component is that the phase A leads the phase B by 120 degrees, the phase B leads the phase C by 120 degrees, and the phase C leads the phase A by 120 degrees. The negative-sequence component is that the phase A lags behind the phase B by 120 degrees, the phase B lags behind the phase C by 120 degrees, and the phase C lags behind the phase A by 120 degrees. The zero-sequence component is that phases of the three phases A, B, and C are the same. In addition, in an alternating current, there is a phase difference between a current and a voltage, and the current may be divided into two parts based on vector analysis: an active current that is in a same phase as a voltage vector, and a reactive current that leads or lags behind the voltage vector by 90 degrees. In other words, the current may be divided into an active component and a reactive component. When a value of a maximum phase voltage output by the three-phase inverter circuit is greater than a first voltage value, a value of a minimum phase voltage is less than a second voltage value, and a positive-sequence component of the three-phase voltages is greater than a third voltage value, the controller determines that the power converter operates in a phase-loss on-grid period. For example, a short-circuit fault may occur on lines between the ports of the three phases A, B, and C of the power converter and the grid, and the grid protection apparatus in the power supply system performs overcurrent protection to control a switch corresponding to the faulty line to be turned off, so that the power supply system operates with a phase loss. The value of the maximum phase voltage output by the three-phase inverter circuit may be a maximum valid alternating current voltage value in the three-phase voltages. The value of the minimum phase voltage output by the three-phase inverter circuit may be a minimum valid alternating current voltage value in the three-phase voltages. Alternatively, when an absolute value of a difference (which may be a difference of a valid value) between at least one phase voltage and another phase voltage in the three-phase voltages output by the three-phase inverter circuit is greater than a first voltage value, and the positive-sequence component of the three-phase voltages is greater than the third voltage value, the controller determines that the power converter operates in the phase-loss on-grid period. The first voltage value is greater than the third voltage value, and the third voltage value is greater than the second voltage value. Further, when the power converter operates in the phase-loss on-grid period, the controller may control an active current and a reactive current that are output by the three-phase inverter circuit to be kept at a first current value and a second current value respectively, or control active power and reactive power that are output by the three-phase inverter circuit to be kept at a first power value and a second power value respectively. Specifically, the controller may control the active current and the reactive current that are output by the three-phase inverter circuit to keep fixed, and the fixed active current and the fixed reactive current may be greater than, equal to, or less than an active current and a reactive current before the power converter operates in the phase-loss on-grid period (that is, when the power converter is normally on-grid). FIG. 5 is a diagram of output control of the three-phase inverter circuit according to this application. For example, the controller controls the active current output by the three-phase inverter circuit. In a normal on-grid period of the power converter, that is, before a moment t1 at which the short-circuit fault occurs, the active current output by the three-phase inverter circuit is Id1 (herein, the active current may be an instantaneous current value, a maximum current value, or the like of the active current). After the short-circuit fault occurs in the power converter at the moment t1, the active current output by the three-phase inverter circuit fluctuates, the grid protection apparatus performs overcurrent protection to control the switch corresponding to the faulty line to be turned off, the power converter is on-grid with the phase loss, and the controller in the power converter controls, at a moment t2, the active current output by the three-phase inverter circuit to be Id2. Herein, Id2 may be greater than, equal to, or less than Id1. A manner in which the controller may control the reactive current, the active power, or the reactive power that are output by the three-phase inverter circuit is similar to that in which the controller controls the active current output by the three-phase inverter circuit. Details are not described herein again. Herein, the controller determines, based on the three-phase voltages output by the three-phase inverter circuit, whether the power supply system operates with the phase loss. No additional phase loss detection apparatus is required, costs of detecting a phase-loss working condition are low, and negative-sequence reactive power or a harmonic does not need to be injected into the grid for detection, to avoid affecting voltage quality of the grid. After identifying that the power supply system operates with the phase loss, that is, identifying that the switch corresponding to the fault phase in the power converter is turned off, the controller controls the active current and the reactive current that are output by the three-phase inverter circuit to be the preset fixed values. This avoids overload of active power and reactive power that are borne by a normal phase in the power converter in the phase-loss period, and prevents an output port of a normal phase from being damaged due to overheat caused by an increase in a voltage and a current, so that the power converter keeps on-grid in the phase-loss period until the power supply system is supported in completing switching from the phase-loss on-grid to the normal on-grid.

The following describes the power converter provided in embodiments of this application by using examples with reference to FIG. 1 to FIG. 6. In some feasible implementations, the controller in the power converter may obtain the three-phase voltages output by the three-phase inverter circuit, and when the value of the maximum phase voltage output by the three-phase inverter circuit is greater than the first voltage value, the value of the minimum phase voltage is less than the second voltage value, and the positive-sequence component of the three-phase voltages is greater than the third voltage value, the controller determines that the power converter operates in the phase-loss on-grid period. Alternatively, when the absolute value of the difference between the at least one phase voltage and the another phase voltage in the three-phase voltages output by the three-phase inverter circuit is greater than the first voltage value, and the positive-sequence component of the three-phase voltages is greater than the third voltage value, the controller determines that the power converter operates in the phase-loss on-grid period. Herein, the first voltage value may be a high voltage ride-through trigger threshold or an overvoltage protection point, the second voltage value may be a low voltage ride-through trigger threshold or an undervoltage protection point, the first voltage value is greater than the third voltage value, and the third voltage value is greater than the second voltage value. The controller determines, based on the three-phase voltages output by the three-phase inverter circuit, whether the power supply system operates with the phase loss. No additional phase loss detection apparatus is required, the costs of detecting the phase-loss working condition are low, and the negative-sequence reactive power or the harmonic does not need to be injected into the grid for the detection, to avoid affecting the voltage quality of the grid.

In some feasible implementations, when the power converter operates in the phase-loss on-grid period, the controller may control the active current and the reactive current that are output by the three-phase inverter circuit to be kept at the first current value and the second current value respectively. Specifically, the first current value is less than or equal to an active current output by the three-phase inverter circuit when the power converter operates in the normal on-grid period, and the second current value is less than or equal to a reactive current output by the three-phase inverter circuit when the power converter operates in the normal on-grid period. Herein, the active current output by the three-phase inverter circuit when the power converter operates in the normal on-grid period may be an active current instruction value received when the power converter operates in the normal on-grid period, and the reactive current output by the three-phase inverter circuit when the power converter operates in the normal on-grid period may be a reactive current instruction value received when the power converter operates in the normal on-grid period. Alternatively, when the power converter operates in the phase-loss on-grid period, the controller may control the active power and the reactive power that are output by the three-phase inverter circuit to be kept at the first power value and the second power value respectively. The first power value is less than or equal to active power output by the three-phase inverter circuit when the power converter operates in the normal on-grid period, and the second power value is less than or equal to reactive power output by the three-phase inverter circuit when the power converter operates in the normal on-grid period. Herein, the active power output by the three-phase inverter circuit when the power converter operates in the normal on-grid period may be an active power instruction value received when the power converter operates in the normal on-grid period, and the reactive power output by the three-phase inverter circuit when the power converter operates in the normal on-grid period may be a reactive power instruction value received when the power converter operates in the normal on-grid period. After identifying that the power supply system operates with the phase loss, the controller controls the active current and the reactive current that are output by the three-phase inverter circuit to be the preset fixed values, and controls the active current and the reactive current that are output by the circuit to be less than or equal to the active current and the reactive current that are output by the three-phase inverter circuit in the normal on-grid period; or controls the active power and the reactive power that are output by the three-phase inverter circuit to be the preset fixed values, and controls the active power and the reactive power that are output by the circuit to be less than or equal to the active power and the reactive power that are output by the three-phase inverter circuit in the normal on-grid period. This avoids the overload of the active power and the reactive power that are borne by the normal phase in the power converter in the phase-loss period, and prevents the output port of the normal phase from being damaged due to the overheat caused by the increase in the voltage and the current, so that the power converter keeps on-grid in the phase-loss period until the power supply system is supported in completing switching from the phase-loss on-grid to the normal on-grid.

In some feasible implementations, when the power converter operates in the phase-loss on-grid period, the controller may control the active current and the reactive current that are output by the three-phase inverter circuit to be kept at the first current value and the second current value respectively. The first current value is j times an active current value output by the three-phase inverter circuit when the three-phase inverter circuit is normally on-grid, and the second current value is k times a reactive current value output by a three-phase inverter circuit when the three-phase inverter circuit is normally on-grid, where j and k are zero or positive numbers less than 1, that is, satisfy 0≤j, and k<1. When both j and k are equal to zero, that is, the controller controls the power converter to keep a zero-power on-grid state, the active power and the reactive power that are borne by the normal phase in the power converter in the phase-loss period are further reduced, and operating safety of the power converter in the phase-loss period is higher. When j and k are positive numbers less than 1, the normal phase in the power converter is enabled to output a part of the active power and a part of the reactive power to the grid in the phase-loss period, to satisfy an on-grid requirement.

In some feasible implementations, when the power converter operates in the phase-loss on-grid period, the controller may control the active current and the reactive current that are output by the three-phase inverter circuit to be kept at the first current value and the second current value respectively. The first current value is j times the active current value output by the three-phase inverter circuit when the three-phase inverter circuit is normally on-grid, and the second current value is k times the reactive current value output by the three-phase inverter circuit when the three-phase inverter circuit is normally on-grid, where j satisfies 0.05≤j≤0.15, and k satisfies 0<k≤0.1. When j is equal to 0.05, that is, the controller controls the power converter to be close to the zero-power on-grid state, the active power borne by the normal phase in the power converter in the phase-loss period is further reduced, and the operating safety of the power converter in the phase-loss period is higher. When j is equal to 0.15 and k is equal to 0.1, the normal phase in the power converter is enabled to bear low levels of active power and reactive power in the phase-loss period, and may output a part of the active power and a part of the reactive power to the grid, to satisfy the on-grid requirement.

In some feasible implementations, when the power converter operates in the normal on-grid period, the controller may control the active current and the reactive current that are output by the three-phase inverter circuit to be respectively equal to the active current instruction value and the reactive current instruction value, where the active current instruction value is determined by input power provided by the direct current power supply or required power of the grid, and the reactive current instruction value is determined by an output voltage of the power converter; or control the active power and the reactive power that are output by the three-phase inverter circuit to be respectively equal to the active power instruction value and the reactive power instruction value, where the active power instruction value is determined by the input power provided by the direct current power supply or the required power of the grid, and the reactive power instruction value is determined by the output voltage of the power converter. Specifically, the controller may obtain the three-phase voltages output by the three-phase inverter circuit, and when a value of a maximum phase voltage output by the three-phase inverter circuit is less than a fourth voltage value, and the value of the minimum phase voltage is greater than a fifth voltage value, the controller determines that the power converter is in the normal on-grid period. Alternatively, when the difference between the value of the maximum phase voltage and the value of the minimum phase voltage is less than a second preset threshold, the controller determines that the power converter is in the normal on-grid period. The fourth voltage value is greater than the third voltage value and less than or equal to the first voltage value, and the fifth voltage value is greater than or equal to the second voltage value and less than the third voltage value. The active current instruction value and the reactive current instruction value, or the active power instruction value and the reactive power instruction value may be current and power instructions generated by the controller based on three-phase voltages output by the three-phase inverter circuit and the voltage of the grid, or may be obtained from an upper-level scheduling device. For example, the active current and the reactive current that are output by the three-phase inverter circuit are controlled. When the power converter is a photovoltaic inverter, the controller may obtain the active current instruction value based on maximum output power of a photovoltaic module connected to an input end of the photovoltaic inverter, that is, the active current instruction value may be positively correlated with a value of the maximum output power of the photovoltaic module. The controller may obtain the reactive current instruction value based on a value of an output voltage of the photovoltaic inverter, for example, when the output voltage is excessively high or excessively low, the reactive current is adjusted to adjust the output voltage, that is, the reactive current instruction value may change in a negative correlation with the value of the output voltage of the photovoltaic inverter. When the power converter is a power conversion system, the controller may obtain the active current instruction value based on required power at an output end of the power conversion system connected to the grid, that is, the active current instruction value may be positively correlated with a value of the required power of the grid. The controller may obtain the reactive current instruction value based on a value of an output voltage of the power conversion system, that is, the reactive current instruction value may change in a negative correlation with the value of the output voltage of the power conversion system. After obtaining the current or power instruction, the controller may control the active and reactive currents or power of the power converter to be recovered to instructions before the phase-loss on-grid with reference to a preset gradient. The controller detects, based on the three-phase voltages output by the three-phase inverter circuit, that the voltage at the port of the power converter recovers to normal, that is, whether the power supply system successfully switches from the phase-loss on-grid to the normal on-grid, and recovers the instructions in the normal on-grid period after identifying that the voltage at the port recovers to normal. This ensures support of the power converter for the grid.

In some feasible implementations, the controller may obtain the three-phase voltages output by the three-phase inverter circuit, and when the absolute value of the difference between the at least one phase voltage and the another phase voltage in the three-phase voltages is less than a third preset threshold, the controller determines that the power converter is in the normal on-grid period. The third voltage value is less than or equal to the first preset threshold. When the absolute value of the difference between the phase voltages in the three-phase voltages output by the three-phase inverter circuit decreases, the controller determines that the power supply system successfully switches from the phase-loss on-grid to the normal on-grid. When the third preset threshold is less than the first preset threshold, accuracy of determining that the power converter is normally on-grid can be further improved. This avoids misjudgment when the power converter is not fully recovered to the normal on-grid, and improves a success rate of switching from the phase-loss on-grid to the normal on-grid.

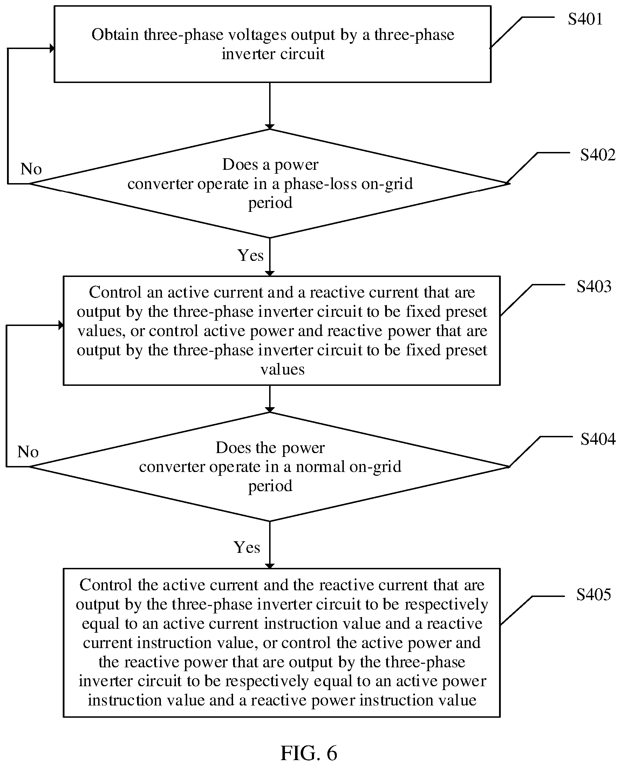

FIG. 6 is a schematic flowchart of a power converter control method according to this application. The power converter control method provided in this application is applicable to the power converter in any power supply system shown in FIG. 1 to FIG. 5. The power converter may include a direct current conversion circuit and a three-phase inverter circuit. An input end of the direct current conversion circuit may be connected to a direct current power supply, an output end of the direct current conversion circuit may be connected to an input end of the three-phase inverter circuit, and an output end of the three-phase inverter circuit is configured to connect to a grid. As shown in FIG. 6, the power converter control method provided in this application includes the following steps.

S401: Obtain three-phase voltages output by the three-phase inverter circuit.

S402: Determine whether the power converter operates in a phase-loss on-grid period; and if a determining result is yes, perform step S403; or if a determining result is no, perform step S401.

In some feasible implementations, the power converter may obtain the three-phase voltages output by the three-phase inverter circuit, and when a value of a maximum phase voltage output by the three-phase inverter circuit is greater than a first voltage value, a value of a minimum phase voltage is less than a second voltage value, and a positive-sequence component of the three-phase voltages is greater than a third voltage value, determine that the power converter operates in the phase-loss on-grid period; or when an absolute value of a difference between at least one phase voltage and another phase voltage in three-phase voltages output by the three-phase inverter circuit is greater than a first voltage value, and a positive-sequence component of the three-phase voltages is greater than a third voltage value, determine that the power converter operates in the phase-loss on-grid period. Herein, the first voltage value may be a high voltage ride-through trigger threshold or an overvoltage protection point, the second voltage value may be a low voltage ride-through trigger threshold or an undervoltage protection point, the first voltage value is greater than the third voltage value, and the third voltage value is greater than the second voltage value. Based on the three-phase voltages output by the three-phase inverter circuit, whether the power supply system operates with a phase loss is determined. No additional phase loss detection apparatus is required, costs of detecting a phase-loss working condition are low, and negative-sequence reactive power or a harmonic does not need to be injected into the grid for detection, to avoid affecting voltage quality of the grid by a phase-loss detection process.

S403: Control an active current and a reactive current that are output by the three-phase inverter circuit to be fixed preset values, or control active power and reactive power that are output by the three-phase inverter circuit to be fixed preset values.

In some feasible implementations, when the power converter operates in the phase-loss on-grid period, the active current and the reactive current that are output by the three-phase inverter circuit may be controlled to be kept at a first current value and a second current value respectively. Specifically, the first current value is less than or equal to an active current output by the three-phase inverter circuit when the power converter operates in a normal on-grid period, and the second current value is less than or equal to a reactive current output by the three-phase inverter circuit when the power converter operates in the normal on-grid period. Herein, the active current output by the three-phase inverter circuit when the power converter operates in the normal on-grid period may be an active current instruction value received when the power converter operates in the normal on-grid period, and the reactive current output by the three-phase inverter circuit when the power converter operates in the normal on-grid period may be a reactive current instruction value received when the power converter operates in the normal on-grid period. Alternatively, when the power converter operates in the phase-loss on-grid period, the active power and the reactive power that are output by the three-phase inverter circuit may be controlled to be kept at a first power value and a second power value respectively. The first power value is less than or equal to active power output by the three-phase inverter circuit when the power converter operates in the normal on-grid period, and the second power value is less than or equal to reactive power output by the three-phase inverter circuit when the power converter operates in the normal on-grid period. Herein, the active power output by the three-phase inverter circuit when the power converter operates in the normal on-grid period may be an active power instruction value received when the power converter operates in the normal on-grid period, and the reactive power output by the three-phase inverter circuit when the power converter operates in the normal on-grid period may be a reactive power instruction value received when the power converter operates in the normal on-grid period. After it is identified that the power supply system operates with the phase loss, the active current and the reactive current that are output by the three-phase inverter circuit are controlled to be the preset fixed values, and the active current and the reactive current that are output by the circuit are controlled to be less than or equal to the active current and the reactive current that are output by the three-phase inverter circuit in the normal on-grid period. Alternatively, the active power and the reactive power that are output by the three-phase inverter circuit are controlled to be the preset fixed values, and the active power and the reactive power that are output by the circuit are controlled to be less than or equal to the active power and the reactive power that are output by the three-phase inverter circuit in the normal on-grid period. This avoids overload of active power and reactive power that are borne by a normal phase in the power converter in the phase-loss period, and prevents an output port of the normal phase from being damaged due to overheat caused by an increase in a voltage and a current, so that the power converter keeps on-grid in the phase-loss period until the power supply system is supported in completing switching from phase-loss on-grid to normal on-grid.

In some feasible implementations, when the power converter operates in the phase-loss on-grid period, the active current and the reactive current that are output by the three-phase inverter circuit may be controlled to be kept at the first current value and the second current value respectively. The first current value is j times an active current value output by the three-phase inverter circuit when the three-phase inverter circuit is normally on-grid, and the second current value is k times a reactive current value output by a three-phase inverter circuit when the three-phase inverter circuit is normally on-grid, where j and k are zero or positive numbers less than 1, that is, satisfy 0≤j, and k< 1. When both j and k are equal to zero, in other words, the power converter is controlled to keep a zero-power on-grid state, the active power and the reactive power that are borne by the normal phase in the power converter in the phase-loss period are further reduced, and operating safety of the power converter in the phase-loss period is higher. When j and k are positive numbers less than 1, the normal phase in the power converter is enabled to output a part of the active power and a part of the reactive power to the grid in the phase-loss period, to satisfy an on-grid requirement.

In some scenarios, the active current and the reactive current that are output by the three-phase inverter circuit are further limited, so that an output voltage can be more stably controlled in the phase-loss period. For example, j satisfies 0.05≤j≤0.15, and k satisfies 0<k≤0.1. This further reduces the active power and the reactive power that are borne by the normal phase in the power converter in the phase-loss period, and the normal phase may output a part of the active power and a part of the reactive power to the grid to support the grid to some extent. Specifically, a value of j may be a value like 0.05, 0.1, or 0.15, and a value of k may be a value like 0.05 or 0.1.

S404: Determine whether the power converter operates in the normal on-grid period; and if a determining result is yes, perform step S405; or if a determining result is no, perform step S403.

S405: Control the active current and the reactive current that are output by the three-phase inverter circuit to be respectively equal to the active current instruction value and the reactive current instruction value, or control the active power and the reactive power that are output by the three-phase inverter circuit to be respectively equal to the active power instruction value and the reactive power instruction value.

In some feasible implementations, the power converter may obtain the three-phase voltages output by the three-phase inverter circuit, and when the value of the maximum phase voltage output by the three-phase inverter circuit is less than a fourth voltage value, and the value of the minimum phase voltage is greater than a fifth voltage value, determine that the power converter is in the normal on-grid period; or when a difference between the value of the maximum phase voltage and the value of the minimum phase voltage is less than a second preset threshold, determine that the power converter is in the normal on-grid period. The fourth voltage value is greater than the third voltage value and less than or equal to the first voltage value, and the fifth voltage value is greater than or equal to the second voltage value and less than the third voltage value. The active current instruction value and the reactive current instruction value, or the active power instruction value and the reactive power instruction value may be obtained from an upper-level scheduling device. After obtaining the current or power instruction, the active and reactive currents or power of the power converter may be controlled to be recovered to instructions before the phase-loss on-grid with reference to a preset gradient. For example, when the power converter is a photovoltaic inverter, the active current instruction value may be obtained based on maximum output power of a photovoltaic module connected to an input end of the photovoltaic inverter, that is, the active current instruction value may be positively correlated with a value of the maximum output power of the photovoltaic module. The reactive current instruction value may be obtained based on a value of an output voltage of the photovoltaic inverter, for example, when the output voltage is excessively high or excessively low, the reactive current is adjusted to adjust the output voltage, that is, the reactive current instruction value may change in a negative correlation with the value of the output voltage of the photovoltaic inverter. When the power converter is a power conversion system, the active current instruction value may be obtained based on required power at an output end of the power conversion system connected to the grid, that is, the active current instruction value may be positively correlated with a value of the required power of the grid. The reactive current instruction value may be obtained based on a value of an output voltage of the power conversion system, that is, the reactive current instruction value may change in a negative correlation with the value of the output voltage of the power conversion system. The active current and the reactive current that are output by the three-phase inverter circuit are controlled to be the preset fixed values during phase-loss operation of the power supply system, based on the three-phase voltages output by the three-phase inverter circuit, that the voltage at the port of the power converter recovers to normal is detected, and the instructions in the normal on-grid period are recovered after it is identified that the voltage at the port recovers to normal. The active current instruction value is determined by the input power provided by the direct current power supply or the required power of the grid, and the reactive current instruction value is determined by the output voltage of the power converter. This ensures that the power converter supports the grid in the normal on-grid period after a faulty phase is resolved.

In some feasible implementations, the power converter may obtain the three-phase voltages output by the three-phase inverter circuit, and when the absolute value of the difference between the at least one phase voltage and the another phase voltage in the three-phase voltages is less than a third preset threshold, determine that the power converter is in the normal on-grid period. The third voltage value is less than or equal to the first preset threshold. When the absolute value of the difference between the phase voltages in the three-phase voltages output by the three-phase inverter circuit decreases, it is determined that the power supply system successfully switches from the phase-loss on-grid to the normal on-grid. When the third preset threshold is less than the first preset threshold, accuracy of determining that the power converter is normally on-grid can be further improved. This avoids misjudgment when the power converter is not fully recovered to the normal on-grid, and improves a success rate of switching from the phase-loss on-grid to the normal on-grid.

In this application, the controller in the power converter determines, based on the three-phase voltages output by the three-phase inverter circuit, whether the power supply system operates with the phase loss. No additional phase loss detection apparatus is required, the costs of detecting the phase-loss working condition are low, and the negative-sequence reactive power or the harmonic does not need to be injected into the grid for the detection, to avoid affecting the voltage quality of the grid. After identifying that the power supply system operates with the phase loss, that is, identifying that the switch corresponding to the fault phase in the power converter is turned off, the controller controls the active current and the reactive current that are output by the three-phase inverter circuit to be the preset fixed values. This avoids the overload of the active power and the reactive power that are borne by the normal phase in the power converter in the phase-loss period, and prevents the output port of the normal phase from being damaged due to the overheat caused by the increase in the voltage and the current, so that the power converter keeps on-grid in the phase-loss period until the power supply system is supported in completing switching from the phase-loss on-grid to the normal on-grid. In addition, based on the three-phase voltages output by the three-phase inverter circuit, that the voltage at the port of the power converter recovers to normal is detected, and the instructions in the normal on-grid period are recovered after it is identified that the voltage at the port recovers to normal. The active current instruction value is determined by the input power provided by the direct current power supply or the required power of the grid, and the reactive current instruction value is determined by the output voltage of the power converter. This ensures that the power converter supports the grid in the normal on-grid period after the faulty phase is resolved.

## Claims

1. A power converter, wherein the power converter comprises a three-phase inverter circuit and a controller, an input end of the three-phase inverter circuit is configured to connect to a direct current power supply, and an output end of the three-phase inverter circuit is configured to connect to a grid; and
the controller is configured to: when a value of a maximum phase voltage in three-phase voltages output by the three-phase inverter circuit is greater than a first voltage value, a value of a minimum phase voltage in the three-phase voltages output by the three-phase inverter circuit is less than a second voltage value, and a positive-sequence component of the three-phase voltages is greater than a third voltage value, or when an absolute value of a difference between any phase voltage and another phase voltage in three-phase voltages is greater than a first preset threshold, and a positive-sequence component of the three-phase voltages is greater than a third voltage value, control an active current and a reactive current that are output by the three-phase inverter circuit to be adjusted to a first current value and a second current value respectively, wherein the first current value and the second current value are fixed values, and
the first voltage value is greater than the third voltage value, the third voltage value is greater than the second voltage value, the value of the maximum phase voltage is a maximum alternating current voltage amplitude or a maximum valid alternating current voltage value in the three-phase voltages, and the value of the minimum phase voltage is a minimum alternating current voltage amplitude or a minimum valid alternating current voltage value in the three-phase voltages.

2. The power converter according to claim 1, wherein an absolute value of the first current value is less than or equal to a maximum value of an absolute value of an active current instruction value, and an absolute value of the second current value is less than or equal to a maximum value of an absolute value of a reactive current instruction value, wherein the active current instruction value is determined by input power provided by the direct current power supply or required power of the grid, and the reactive current instruction value is determined by an output voltage of the power converter.

3. The power converter according to claim 1, wherein the first current value is j times an active current value output by the three-phase inverter circuit when the three-phase inverter circuit is normally on-grid, and the second current value is k times a reactive current value output by the three-phase inverter circuit when the three-phase inverter circuit is normally on-grid, wherein j and k satisfy 0≤j, and k< 1.

4. The power converter according to claim 1, wherein the first current value is j times an active current value output by the three-phase inverter circuit when the three-phase inverter circuit is normally on-grid, and the second current value is k times a reactive current value output by the three-phase inverter circuit when the three-phase inverter circuit is normally on-grid, wherein j satisfies 0.05≤j≤0.15, and k satisfies 0<k≤0.1.

5. The power converter according to any one of claims 1 to 4, wherein the controller is configured to: when the value of the maximum phase voltage is less than a fourth voltage value, and the value of the minimum phase voltage is greater than a fifth voltage value, or when a difference between the value of the maximum phase voltage and the value of the minimum phase voltage is less than a second preset threshold, control the active current output by the three-phase inverter circuit to change with the input power provided by the direct current power supply or the required power of the grid and the reactive current output by the three-phase inverter circuit to change with an output voltage of the three-phase inverter circuit, wherein the fourth voltage value is greater than the third voltage value and less than or equal to the first voltage value, and the fifth voltage value is greater than or equal to the second voltage value and less than the third voltage value.

6. The power converter according to any one of claims 1 to 4, wherein the controller is configured to: when an absolute value of a difference between at least one phase voltage and another phase voltage in the three-phase voltages is less than a third preset threshold, control the active current output by the three-phase inverter circuit to change with the input power provided by the direct current power supply or the required power of the grid and the reactive current output by the three-phase inverter circuit to change with an output voltage of the three-phase inverter circuit, wherein the third preset threshold is less than or equal to the first preset threshold.

7. The power converter according to any one of claims 2 to 6, wherein the power converter is a photovoltaic inverter, the direct current power supply is a photovoltaic module, the active current instruction value is positively correlated with a value of maximum output power of the photovoltaic module, and the reactive current instruction value changes in a negative correlation with a value of the output voltage of the photovoltaic inverter.

8. The power converter according to any one of claims 2 to 6, wherein the power converter is a power conversion system, the direct current power supply is an energy storage battery, the active current instruction value is positively correlated with a value of the required power of the grid, and the reactive current instruction value changes in a negative correlation with a value of the output voltage of the converter.

9. A power converter control method, wherein the method comprises:
when a value of a maximum phase voltage in three-phase voltages output by a three-phase inverter circuit in a power converter is greater than a first voltage value, a value of a minimum phase voltage in the three-phase voltages output by the three-phase inverter circuit is less than a second voltage value, and a positive-sequence component of the three-phase voltages is greater than a third voltage value, or when an absolute value of a difference between any phase voltage and another phase voltage in three-phase voltages is greater than a first preset threshold, and a positive-sequence component of the three-phase voltages is greater than a third voltage value, controlling an active current and a reactive current that are output by the three-phase inverter circuit to be adjusted to a first current value and a second current value respectively, wherein the first current value and the second current value are fixed values, and
an input end of the three-phase inverter circuit is configured to connect to a direct current power supply, an output end of the three-phase inverter circuit is configured to connect to a grid, the first voltage value is greater than the third voltage value, the third voltage value is greater than the second voltage value, the value of the maximum phase voltage is a maximum alternating current voltage amplitude or a maximum valid alternating current voltage value in the three-phase voltages, and the value of the minimum phase voltage is a minimum alternating current voltage amplitude or a minimum valid alternating current voltage value in the three-phase voltages.

10. The method according to claim 9, wherein:
an absolute value of the first current value is less than or equal to a maximum value of an absolute value of an active current instruction value, and an absolute value of the second current value is less than or equal to a maximum value of an absolute value of a reactive current instruction value, wherein the active current instruction value is determined by input power provided by the direct current power supply or required power of the grid, and the reactive current instruction value is determined by an output voltage of the power converter.

11. The method according to claim 9, wherein:
the first current value is j times an active current value output by the three-phase inverter circuit when the three-phase inverter circuit operates normally, and the second current value is k times a reactive current value output by the three-phase inverter circuit when the three-phase inverter circuit operates normally, wherein 0≤j, and k<1.

12. The method according to claim 9, wherein:
the first current value is j times an active current value output by the three-phase inverter circuit when the three-phase inverter circuit operates normally, and the second current value is k times a reactive current value output by the three-phase inverter circuit when the three-phase inverter circuit operates normally, wherein j satisfies 0.05≤j≤0.15, and k satisfies 0<k≤0.1.

13. The method according to any one of claims 9 to 12, wherein:
when the value of the maximum phase voltage is less than a fourth voltage value, and the value of the minimum phase voltage is greater than a fifth voltage value, or when a difference between the value of the maximum phase voltage and the value of the minimum phase voltage is less than a second preset threshold, controlling the active current output by the three-phase inverter circuit to change with the input power provided by the direct current power supply or the required power of the grid and the reactive current output by the three-phase inverter circuit to change with an output voltage of the three-phase inverter circuit, wherein the fourth voltage value is greater than the third voltage value and less than or equal to the first voltage value, and the fifth voltage value is greater than or equal to the second voltage value and less than the third voltage value.

14. The method according to any one of claims 9 to 12, wherein:
when an absolute value of a difference between at least one phase voltage and another phase voltage in the three-phase voltages is less than a third preset threshold, controlling the active current output by the three-phase inverter circuit to change with the input power provided by the direct current power supply or the required power of the grid and the reactive current output by the three-phase inverter circuit to change with an output voltage of the three-phase inverter circuit, wherein the third preset threshold is less than or equal to the first preset threshold.
